# EUROPEAN PATENT SPECIFICATION

(11) **EP 3 524 713 B1**
(45) Date of publication and mention of the grant of the patent: **26.02.2020**
(21) Application number: 19154657.1
(22) Date of filing: 31.01.2019
(51) Int. Cl.: D01D 5/18

(54) **A SPINNING HEAD FOR CENTRIFUGAL SPINNING OF NANOFIBERS AND/OR MICROFIBERS FROM POLYMER SOLUTIONS AND/OR MELTS**
SPINNKOPF ZUM ZENTRIFUGALSPINNEN VON NANOFASERN UND/ODER MIKROFASERN AUS POLYMERLÖSUNGEN UND/ODER SCHMELZEN
TÊTE DE FILAGE CENTRIFUGE DE NANOFIBRES ET/OU DE MICROFIBRES À PARTIR DE SOLUTIONS POLYMÈRES ET/OU DE FUSIONS

(30) Priority: 12.02.2018 CZ 20180067
(43) Date of publication of application: 14.08.2019
(73) Proprietor: VÚTS, a.s., Liberec XI - Ruzodol I 460 01 Liberec (CZ)
(72) Inventor: Sramek, Rudolf, 460 14 Liberec (CZ)
(74) Representative: Musil, Dobroslav

(56) References cited:
- EP-A1- 0 017 510
- US-B2- 7 901 195

## Description

### Technical field

The invention relates to a spinning head for producing nanofibers and/or microfibers by centrifugal spinning from a polymer solution or melt, which comprises a support body coupleable to a drive, a reservoir of the polymer being spun, a pressure nut displaceable relative to the support body in axial direction and spinning orifices for feeding the spinning polymer from the reservoir to the circumference of the spinning head which are located between the support body and the pressure nut.

### Background art

One of the methods of producing polymer nanofibers and/or microfibers is centrifugal spinning. WO2012109240 discloses a centrifugal spinning device comprising a rotatably mounted head having two discs arranged on top of each other in which a reservoir is provided for the spun polymer, the reservoir being connected to the circumference of the discs by means of grooves formed in contact surfaces between the discs. The discs are mutually interconnected so that the grooves arranged against each other create spinning orifices. Rotation of the head causes the material to be ejected from the reservoir to the circumference and through the spinning orifices outward, to produce nanofibers and/or microfibers which are carried by an air flow and deposited on a substrate material.

The disadvantage of this solution is above all the difficulty of cleaning the grooves in the discs from the spun polymer since, with the use of a solvent and without the use of mechanical means, the polymer is difficult to remove and the use of mechanical means would pose a serious risk of damage to the grooves whose dimensions are in the order of tens to hundreds of microns (the dimensions are given, for example, in WO2012109240 page 17, lines 10-11).

US2016069000A1 discloses a centrifugal spinning head comprising an upper pressure member and a lower support member between which there is at least one grooved intermediate member whose grooves interconnect the inner cavity forming the reservoir of the spun polymer to the circumference, thereby forming spinning openings of a certain size which is constant. If there is a need to change the size of the spinning openings, whether due to changes in the viscosity of the polymer, the nature of the polymer, the need for thinner or thicker fibers, etc., it is necessary to interrupt or terminate the spinning process and replace the grooved intermediate member with a intermediate member having other dimensions and/or groove shapes. This causes problems especially when starting the spinning process from a new polymer or when changing the viscosity due to the aging of the polymer in the reservoir. The size of the spinning openings can vary from 0.1-0.5 mm.

CZ PV2015-327 describes a device for producing nanofibers or microfibers, which comprises at least one rotating disc. Each rotating disc includes an upper part and a lower part, between which an output gap is formed around the circumference. The size of the output gap between the upper part and the lower part of the rotating disc is formed by a spacer element, in particular a spacer ring. The disadvantage of this solution is that for enlargement or reduction of the size of the output gap, it is necessary to interrupt or terminate the spinning process, remove the upper part of the disc, i.e. the spinning head, replace the spacer and attach the upper part again.

US4790736 discloses a device for producing fibers comprising feeding channels in a spinning head through which the polymer is fed in a radial direction from the inner part of the spinning head to the outer edge. At the ends of these channels spinning nozzles can be mounted replaceably, changing the shape of the spun polymer behind the channel mouth. The drawback of the described solution is the fact that it is not possible to change the size of the feeding channel which feeds the polymer from the reservoir to the outer edge of the spinning head and the spinning nozzles cannot be replaced without interrupting or stopping the spinning process.

The aim of the invention is therefore to provide a spinning head for centrifugal spinning with the possibility of at least partially adjusting the cross-sectional size of the spinning orifices without removing the head which will be easy to clean and the cost of producing the head will be lower compared to the state of the art.

### Principle of the invention

The aim of the invention is achieved by a spinning head whose principle consists in that the spinning orifices are adapted to adjust their cross-sections without dismantling the spinning head.

The spinning orifices are formed between two discs which are displaceable relative to each other, preferably in the axial and/or tangential direction. In a preferred embodiment, one of the discs is formed by a support body and the other by a pressure nut, the two discs being provided with threads for interconnecting them. An interconnecting member provided with grooves is inserted between the discs, whereby the grooves together with the surface of the adjacent discs form spinning orifices.

In a preferred embodiment, a flexible interconnecting member is inserted between the two discs. The flexible interconnecting member is provided with grooves which extend from a reservoir of the polymer being spun to the outer circumference of the spinning head. These grooves are located either on one planar side of the interconnecting member or on both planar sides of the interconnecting member, or, alternatively, the grooves extend at least along a part of the interconnecting member across its entire thickness, especially on its outer circumference.

In another preferred embodiment, an interconnecting member made of a rigid material is inserted between the discs, which is provided with grooves passing through the interconnecting member from the inner circumference adjacent to the reservoir of the material being spun to the outer circumference of the spinning head. The grooves are located either only on one (planar) side of the interconnecting member, adjacent to the disc, or on both (planar) sides of the interconnecting member, or, alternatively, the grooves are formed on at least a part of the interconnecting member over its entire thickness, especially on its outer circumference. An auxiliary flexible interconnecting member abuts against the side provided with the grooves.

The annular bearing surface of the support body, the annular pressure surface of the pressure nut and the interconnecting member may have different shapes and the variants described are not a limiting list of possible combinations. In a preferred embodiment, these surfaces are formed by oblique and vertical surfaces, forming the so-called saw teeth which abut against each other. By rotating the pressure nut about its rotation axis, the distance between these vertical surfaces increases or decreases, with the space between them forming spinning orifices.

### Description of drawings

The invention is schematically represented in the following drawings, wherein Fig. 1 is a cross-sectional view of a spinning head, Fig. 2 is a cross-sectional view of a support body of the spinning head, Fig. 3 is a cross-sectional view of a pressure flange of the spinning head, Fig. 4 is a detail of the cross-sectional view of the pressure flange, Fig. 5a is a side view of another embodiment of support and pressure flanges with an interconnecting member and radial grooves, Fig. 5b is a side view of the support and pressure flanges with two interconnecting members and radial grooves, Fig. 6a is a side view of another embodiment of the support and pressure flanges with an interconnecting member and radial grooves, Fig. 6b is a side view of another embodiment of the support and pressure flanges with two interconnecting members and radial grooves, Fig. 7 is a side view of the support and pressure flanges provided with a bearing and pressure surfaces of a saw-tooth shape, Fig. 8 is a cross-sectional view of the spinning head in an embodiment without an interconnecting member.

### Examples of embodiment

The spinning head according to the invention comprises a support body 1 which is is adapted to be connected by some of the known methods to a drive shaft which is coupled to a drive.

A support flange 11 is provided on the circumference of the support body 1, whereby an annular bearing surface 111 is formed on the support flange 11. In the middle of the annular bearing surface 111 a cylinder 12 protrudes from the support flange 11, whereby in the axis of the cylinder a cavity is created, forming a reservoir 121 of polymer. In the cylinder 12 radial openings 122 are formed near the bottom of the polymer reservoir 121 to allow the spinning of the spun polymer from the reservoir 121.

The cylinder 12 is provided with a thread on the outer circumference, on which a pressure nut 2 with a thread on its inner circumference is mounted, whereby a pressure flange 21 is provided on the outer circumference of the pressure nut 2 on which an annular pressure surface 211 is formed, whereby the dimensions of the annular pressure surface 211 correspond to the dimensions of the annular bearing surface 111 of the support flange 11 formed on the circumference of the support body 1. In one embodiment, the pressure nut 2 on the support body 1 is secured by means of a locking nut 13 and/or a locking bolt 14. A recess 22 is provided in the annular pressure surface 211 to connect the radial openings 122 to the space between the annular bearing surface 111 and the annular pressure surface 211, in which an interconnecting member 3 is mounted, with radial grooves 31 formed in it.

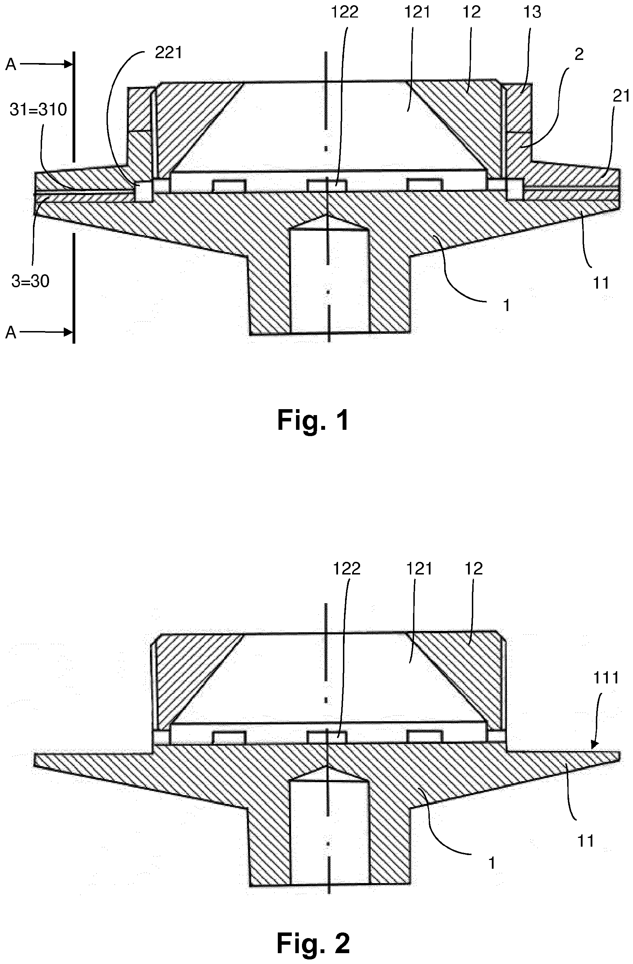

In the embodiment according to Fig. 1, the inner diameter of the interconnecting member 3 is equal to the outer diameter of the recess 22 in the annular pressure surface 211 of the pressure flange 21. Thus, between the cylinder 12, a part of the annular bearing surface 111 and the recess 22, is created an annular cavity 221 which serves to interconnect the radial openings 122 in the cylinder of the support body 1 and the radial grooves 31 in the interconnecting member 3 and thereby serves to feed the polymer from the reservoir 12 to the radial grooves 31 which open into the circumference of the interconnecting member 3. In this embodiment, the interconnecting member 3 is made of a flexible and deformable material and on one of its faces are formed radial grooves 31 against which the annular pressure surface 211 of the pressure flange 21 abuts and which together with the annular pressure surface 211 form spinning orifices 310. In an alternative embodiment, the inner diameter of the interconnecting member 3 can be greater than the outer diameter of the recess 22.

If it is necessary to change the cross-section of the spinning orifices 310, the rotation of the support body 1 of the spinning head stops and without dismantling the head and with the actual amount of the polymer being spun in the reservoir 121 by simply rotating the pressure nut 2, the position of the annular pressure surface 211 of the pressure flange 21 relative to the annular bearing surface 111 of the support flange 11 changes, thereby changing the distance, as well as the size of the compression force between them, whereupon the flexible interconnecting member 3 is either partially compressed or partially released, thereby changing the cross-section of the grooves 31 and hence also the cross-section of the spinning orifices 310. In another embodiment, the pressure flange 21 is not mounted by means of a threaded joint, but in another known manner which allows its movement only in the axial direction, whereby a change of its position relative to the flange 11 is achieved by tightening or loosening the locking nut 13.

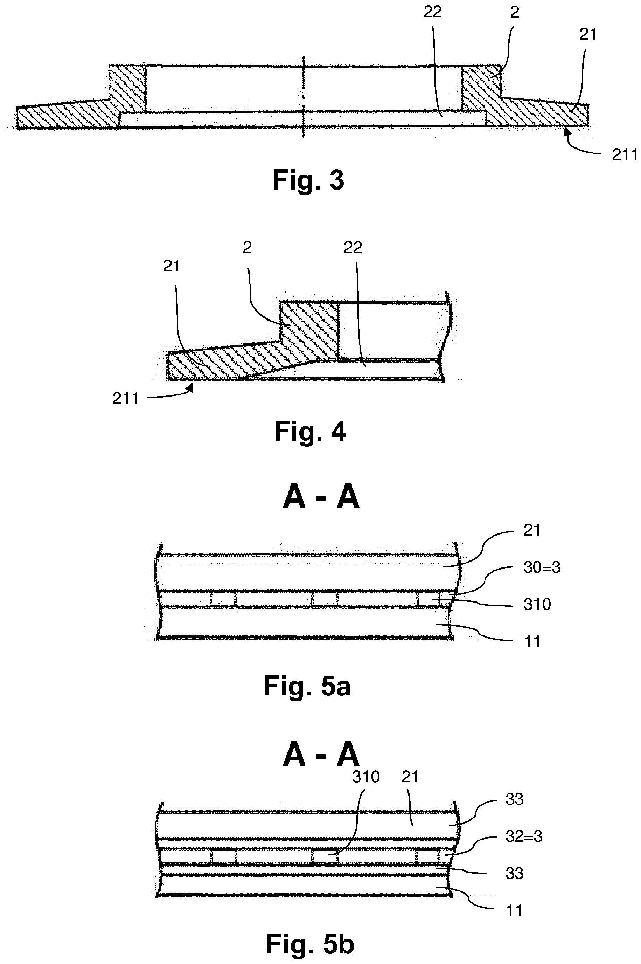

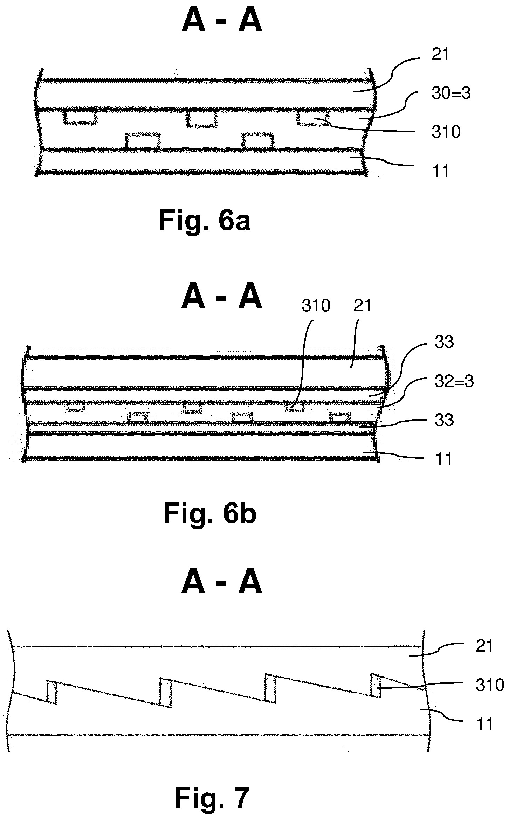

The radial grooves 31 in the flexible interconnecting member 30 can be created from both sides thereof, as shown in Fig. 6a, where the two annular surfaces 111 and 211 cooperate to form the spinning orifices 310, or the radial grooves 31 extend across the entire thickness of the flexible interconnecting member 30 at least on the circumference of the flexible interconnecting member 30, as shown in Fig. 5a. The cross-section of the radial grooves 31 can be varied along their length and, consequently, the cross-section of the spinning orifices 310 can also be varied along their length. In this embodiment, too, the cross-section of the spinning orifices 310 varies by increasing or decreasing the distance between the annular pressure surface 211 and the annular bearing surface 111 without dismantling the device. The flexible interconnecting member 30 is in this exemplary embodiment made of a single piece of material, but in another embodiment, it may be made from multiple parts.

In an alternative embodiment according to Figs. 5b and 6b, the radial grooves 31 are formed in an interconnecting member 3 made of a rigid material, for example metal; this interconnecting member will be referred to as a rigid interconnecting member 32 hereinafter. In the embodiment described below, the rigid interconnecting member 32 is made from a single piece of material, in another embodiment, however, it may be made from multiple parts.

In the embodiment according to Fig. 5b, the grooves 31 in the rigid interconnecting member 32 at least on the circumference of the rigid interconnecting member 32 become wider across its entire thickness and the auxiliary flexible interconnecting member 33 abuts from both sides against the rigid interconnecting member 32, and so the spinning orifices 310 are formed by the grooves 31 in the rigid interconnecting member 32 and by the respective bearing surfaces of the auxiliary flexible interconnecting members 33, whereby the auxiliary flexible interconnecting members 33 are disposed between the annular pressure surface 211 of the pressure flange 21 and the annular bearing surface 111 of the support flange 11. Due to the change in distance between the annular pressure surface 211 and the annular bearing surface 111, i.e. the change in the compression force, there are changes in the deformation of the auxiliary flexible interconnecting members 33, thereby filling or releasing the cross-section of the radial grooves in the rigid interconnecting member 32 material of the auxiliary flexible interconnecting members 33.

Similarly, in the embodiment according to Fig. 6b, the radial grooves 31 are formed in the rigid interconnecting member 32 from both its sides, whereby the auxiliary flexible interconnecting members 33 abut against both sides of the rigid interconnecting member 32. The auxiliary flexible interconnecting members 33 are disposed between the annular pressure surface 211 and the annular bearing surface 111 and changes in their distance or compression force between them result in changes in the amount of the material of the auxiliary flexible interconnecting members 33 which is pressed into the respective radial grooves 31.

In the embodiment according to Fig. 7, the annular bearing surface 111 of the support flange 11 and the annular pressure surface 211 of the pressure flange 21 have a sawtooth shape formed by oblique and vertical surfaces, which abut against each other in the fully screwed state. By turning the pressure head 2 the oblique surfaces move on each other, and consequently the vertical surfaces of the annular surfaces 111, 211 are spaced apart or approached, thereby creating spinning orifices 310, whose size is adjustable by the extent of rotation. In the embodiment shown, there is no flexible interconnecting member 30 disposed between the annular surfaces 111, 211.

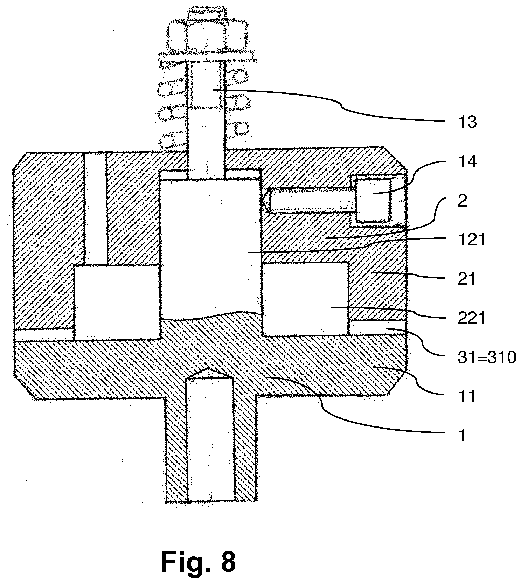

Fig. 8 shows a spinning head configured according to Fig. 7, without a flexible interconnecting member 30. The pressure nut 2 is in this exemplary embodiment secured on the support body 1 by means of a locking nut 13 and a locking bolt 14.

In an unillustrated embodiment, the radial grooves 31 are formed in the rigid interconnecting member 32 from one side, like in the embodiment of the flexible interconnecting member 30 of Fig. 1. From the side of the grooves 31, the flexible interconnecting member 33 abuts against the rigid interconnecting member 32, whereby both the rigid interconnecting member 32 and the auxiliary flexible interconnecting member 33 are situated between the annular pressure surface 211 and the annular bearing surface 111.

In another unillustrated embodiment, the radial grooves 31 are formed in the annular bearing surface 111 and/or the annular pressure surface 211, and an auxiliary flexible interconnecting member 33 is mounted between these annular surfaces 111, 211.

### Industrial applicability

The invention is applicable, for example, in devices for centrifugal spinning, especially in cases when it is necessary to control the amount of the spun polymer being fed from the polymer reservoir to the circumference of the spinning head.

### List of references

- 1: support body
- 11: support flange
- 111: annular bearing surface
- 12: cylinder
- 121: reservoir
- 122: radial orifices
- 13: locking nut
- 14: locking bolt
- 2: pressure nut
- 21: pressure flange
- 211: annular pressure surface
- 22: recess
- 221: annular cavity
- 3: interconnecting member
- 30: flexible interconnecting member
- 31: radial grooves
- 32: rigid interconnecting member
- 33: auxiliary flexible interconnecting member
- 310: spinning orifices

## Claims

1. A spinning head for the production of nanofibers and/or microfibers by centrifugal spinning from a polymer solution or melt, which comprises a support body (1) coupleable to a drive, a reservoir (121) of the polymer being spun and a pressure nut (2) adjustable relative to the support body (1) in the axial direction and spinning orifices (310) formed between the support body (1) and the pressure nut (2) for feeding the polymer being spun from the reservoir (121) to the circumference of the spinning head, **characterized in that** the spinning orifices (310) are adapted to adjust their cross-sections without dismantling the spinning head.

2. The spinning head according to claim 1, **characterized in that** the spinning orifices (310) are located between the support body (1) and the pressure nut (2) which are displaceable relative to each other in the axial and tangential directions.

3. The spinning head according to claim 2, **characterized in that** the pressure nut (2) is mounted on the support body (1) by means of a threaded joint.

4. The spinning head according to claim 2 or 3, **characterized in that** the spinning orifices (310) are formed by grooves (31) in an interconnecting member (30) made of a flexible material, which is arranged between the support body (1) and the pressure nut (2) which are coupled to each other by a threaded joint.

5. The spinning head according to claim 2 or 3, **characterized in that** the spinning orifices (310) are formed by the grooves (31) in the interconnecting member (32) made of a rigid material, against which an auxiliary flexible interconnecting member (33) abuts from the side of the grooves (31).

6. The spinning head according to claim 4 or 5, **characterized in that** the spinning orifices (310) are formed by the grooves (31) on both faces of the interconnecting member (3).

7. The spinning head according to claim 4 or 5, **characterized in that** the spinning orifices (310) are formed by the grooves (31) on one face of the interconnecting member (3).

8. The spinning head according to claim 6 or 7, **characterized in that** the grooves (31) are formed at least on the outer circumference of the interconnecting member (3) across its entire thickness.

9. The spinning head according to claim 2, **characterized in that** the spinning orifices (310) are formed by gaps between radial protrusions engaging in radial grooves in the discs, whereby the grooves (31) are formed between the vertical surfaces of the grooves and those of the protrusions, which abut against each other with their sloping surfaces.

## Patentansprüche

1. Spinnkopf zur Produktion von Nanofasern und/oder Mikrofasern durch ein Zentrifugalspinnen aus einer Polymerlösung oder Schmelze, der einen Tragkörper (1), der mit einem Antrieb koppelbar ist, einen Behälter (121) des zu spinnenden Polymers und eine Andruckschraubenmutter (2), die gegenüber dem Tragkörper (1) in der Axialrichtung verstellbar ist, und zwischen dem Tragkörper (1) und der Andruckschraubenmutter (2) Spinnöffnungen (310) zur Zufuhr des zu spinnenden Polymers aus dem Behälter (121) zum Umfang des Spinnkopfes aufweist, **dadurch gekennzeichnet, dass** die Spinnöffnungen (310) zur Regelung von ihren Querschnitten ohne die Demontage des Spinnkopfes angepasst sind.

2. Spinnkopf nach dem Anspruch 1, **dadurch gekennzeichnet, dass** die Spinnöffnungen (310) zwischen dem Tragkörper (1) und der Andruckschraubenmutter (2) situiert sind, die in einer axialen und tangentialen Richtung gegenüberliegend verstellbar gelagert sind.

3. Spinnkopf nach dem Anspruch 2, **dadurch gekennzeichnet, dass** die Andruckschraubenmutter (2) auf dem Tragkörper (1) mit Hilfe einer Gewindeverbindung gelagert ist.

4. Spinnkopf nach dem Anspruch 2 oder 3, **dadurch gekennzeichnet, dass** die Spinnöffnungen (310) durch die Nuten (31) in einem Zwischenglied (30) aus einem elastischen Material gebildet sind, das zwischen den Tragkörper (1) und die Andruckschraubenmutter (2) gelagert ist, die durch eine Gewindeverbindung gegenseitig verkoppelt sind.

5. Spinnkopf nach dem Anspruch 2 oder 3, **dadurch gekennzeichnet, dass** die Spinnöffnungen (310) durch die Nuten (31) in einem Zwischenglied (32) aus einem festen Material gebildet sind, auf das von der Seite der Nuten (31) ein elastisches Hilfszwischenglied (33) aufsetzt.

6. Spinnkopf nach dem Anspruch 4 oder 5, **dadurch gekennzeichnet, dass** die Spinnöffnungen (310) durch die Nuten (31) an beiden Stirnseiten des Zwischengliedes (3) gebildet werden.

7. Spinnkopf nach dem Anspruch 4 oder 5, **dadurch gekennzeichnet, dass** die Spinnöffnungen (310) durch die Nuten (31) in einer Stirnseite des Zwischengliedes (3) gebildet werden.

8. Spinnkopf nach dem Anspruch 6 oder 7, **dadurch gekennzeichnet, dass** die Nuten (31) mindestens auf dem Außenumfang des Zwischengliedes (3) über seine ganze Dicke gebildet sind.

9. Spinnkopf nach dem Anspruch 2, **dadurch gekennzeichnet, dass** die Spinnöffnungen (310) durch die Spalte zwischen den ineinander eingreifenden Radialnuten und Radialvorsprüngen in den Scheiben gebildet sind, wobei die Nuten (31) zwischen den senkrechten Flächen von Nuten und Vorsprüngen gebildet sind, die aufeinander mit ihren schrägen Flächen aufsetzen.

## Revendications

1. Tête de filage pour la production des nanofibres et/ou des microfibres par le filage centrifuge à partir de la solution polymère ou de la matière fondue, qui comprend un corps de support (1) couplé à l'entraînement, un récipient (121) en polymère filé et un écrou de poussée (2) réglable par rapport au corps de support (1) dans une direction axiale et entre le corps de support (1) et l'écrou de poussée (2) il y a les trous du filage (310) pour amener le polymère filé du récipient (121) à la périphérie de la tête de filage, **caractérisé en ce que** les trous du filage (310) sont adaptés pour contrôler leurs profils sans démonter la tête de filage.

2. Tête de filage selon la revendication 1, **caractérisée en ce que** les trous du filage (310) sont situés entre le corps de support (1) et l'écrou de poussée (2), qui sont réglables les uns par rapport aux autres dans les directions axiale et tangentielle.

3. Tête de filage selon la revendication 2, **caractérisée en ce que** l'écrou de poussée (2) est monté sur le corps de support (1) à l'aide d'une liaison filetée.

4. Tête de filage selon la revendication 2 ou 3, **caractérisée en ce que** les trous du filage (310) sont formés par des rainures (31) formées dans l'élément intermédiaire (30) d'un matériel élastique, qui est interposé entre le corps de support (1) et l'écrou de poussée (2), qui sont couplés l'un à l'autre par une liaison filetée.

5. Tête de filage selon la revendication 2 ou 3, **caractérisée en ce que** les trous du filage (310) sont formés par des rainures (31) dans l'élément intermédiaire (32) du matériel solide, sur lequel l'élément intermédiaire élastique auxiliaire (33) s'appuie du côté des rainures (31).

6. Tête de filage selon la revendication 4 ou 5, **caractérisée en ce que** les trous du filage (310) sont formés par des rainures (31) sur les deux faces de l'élément intermédiaire (3).

7. Tête de filage selon la revendication 4 ou 5, **caractérisée en ce que** les trous du filage (310) sont formés par des rainures (31) dans une face de l'élément intermédiaire (3).

8. Tête de filage selon la revendication 6 ou 7, **caractérisée en ce que** les rainures (31) sont formées au moins sur la circonférence extérieure de l'élément intermédiaire (3) sur toute son épaisseur.

9. Tête de filage selon la revendication 2, **caractérisée en ce que** les trous du filage (310) sont formés par des fentes entre les rainures radiales intermédiaires et les saillies radiales dans les disques, tandis que les rainures (31) sont formées entre les surfaces verticales des rainures et des saillies qui se touchent par leurs surfaces inclinées.
